# EUROPEAN PATENT SPECIFICATION

(11) **EP 2 146 109 B1**
(45) Date of publication and mention of the grant of the patent: **29.06.2011**
(21) Application number: 09164407.0
(22) Date of filing: 02.07.2009
(51) Int. Cl.: F16D 55/24, F16D 65/20

(54) **A hydraulic disk brake retractor system**
Hydraulikscheiben-Bremseneinzugssystem
Système de rétracteur de frein à disque hydraulique

(30) Priority: 15.07.2008 US 173129
(43) Date of publication of application: 20.01.2010
(73) Proprietor: Deere & Company, Moline, IL 61265-8098 (US)
(72) Inventor: Vu, Thomas Hung, Cedar Falls, IA 50613 (US)
(74) Representative: Holst, Sönke

(56) References cited:
- WO-A-98/05879
- WO-A-03/023246
- FR-A- 2 521 506
- US-A- 4 184 573

## Description

The present invention relates to a hydraulic brake assembly for a moving vehicle comprising: at least one friction disk splined into a brake housing cavity, the at least one friction disk is engaged by a brake piston and rotates within the brake housing cavity; at least one separator plate) splined onto a rotating hub within the brake housing cavity, the at least one separator plate is engaged by the at least one friction disk; a source of hydraulic fluid flowing within a narrow passage in the brake housing cavity for disengaging the brake and retracting the brake piston; a retractor shaft mounted inside the brake housing cavity, having a first end and a second end, a retractor piston attached to the first end of the retractor shaft, the brake piston attached to the second end of the retractor shaft, wherein the retractor piston adjacently located next to a brake spring, the brake spring situated between a retaining device and the retractor piston which engages the brake piston.

Brake assemblies are generally used to stop the movement of motor vehicles, such as an agricultural tractor. As shown in U.S. Patent No. 6,002,976, the driveline of a typical agricultural tractor, for example a tractor in the John Deere 6000 series, includes an engine, a shifted multi-speed transmission, a reversing unit, a drive clutch, an optional creeper transmission, a shifted range transmission, and a rear axle differential gear which drives the rear wheels. As shown in U.S. Patent 5,197,574, a brake may also be provided between the transmission housing and the rear axle differential gear. Due to low operating speeds, large mass and high torque under which agricultural tractors operate, these brakes are often configured so the brake disks are submerged in oil. The oil serves to lubricate and carry heat away from the brake disks when the brakes are applied by a tractor operator.

When the brakes are initially assembled, an optimal running clearance is set between a brake piston, the brake disks, separator plates (if applicable) and a brake cover. Ideally, a very small running clearance between brake disks is desired to allow for fast brake engagement and a short pedal throw. However, if the clearance is too small, windage effect may prevent sufficient oil flow between the braking surfaces, interfering with the lubrication and cooling of the brake disks. In addition, the small amount of oil between the braking surfaces may become entrapped. As a result, even when the brake is not engaged, significant heat may be generated between the braking surfaces and the entrapped oil, causing damage to the brake assembly.

In most of today's brake system design, there is usually a compromise between having as much running clearance as possible to reduce drag, and improve system efficiency, while at the same time, keeping this running clearance small to meet manual braking stopping distance versus time requirement per regulation.

WO 98/05879 discloses a park and service brake arrangement, comprising a first and a second brake piston arrangement. Both brake piston arrangements are independently operable from each other, wherein the first brake piston arrangement is combined with a spring arrangement, in order to preload the first brake piston arrangement with a spring braking force, engaging the first brake piston with a friction pad, wherein the first brake piston arrangement can be hydraulically activated to retract the piston from engagement with the friction pad, acting against said biasing spring braking force. The second brake arrangement is hydraulically operable separately from the first brake arrangement in order to engage with the same friction pad. First and second brake piston arrangements are not coupled to each other and no further retraction arrangement for the second brake piston arrangement is provided. Therefore the running clearance from the second brake piston arangement may not be optimal in all operation conditions. Furthermore, with loss of hydraulic pressure the spring arrangement will cause an automatic and permanent brake force to the first brake piston arrangement. However, this might not always be desired from the operator.

To minimize windage loss through brake disks, it is therefore desirable to maximize the running clearance between brake disks. Alternatively, it is also desirable to minimize running clearance between brake disks in order to maximize braking performance, especially in the power-down condition, where hydraulic power to brake valve is lost, and the operator must make an emergency brake stop with only the limited available flow volume from the brake valve.

It is therefore an object of the invention to provide a brake design with more running clearance for improved efficiency, and yet, still be able to meet the regulated requirement for manual brake stopping distance versus time.

This and other objects are achieved by the teachings of claim 1, wherein brake assembly of the above mentioned type comprises a brake piston annular passage which can be hydraulically pressurized in order to move the brake piston within the housing cavity in a first direction; a retractor piston cavity which can be hydraulically pressurized in order to move the brake piston within the housing cavity in a second direction opposite to the first direction, wherein in a power-on condition pressurizing the retractor piston cavity a running clearance between the brake piston and the at least one friction disc is created, wherein the brake spring is biased to urge the brake piston to a near contact position for brake engagement, wherein in a power-down condition with hydraulic pressure in cavity being zero the brake piston is urged by the brake spring to a near contact position in which the brake is not fully engaged.

In light of the above background information, an improved spring-loaded brake retractor system is proposed. This spring-loaded brake retractor system uses the system's hydraulic power to retract the brake piston to provide desired running clearance between disks. In the power-down condition, the spring will provide the force to position the brake piston against brake disk pack to eliminate the piston "travel" that is normally required to bring brake piston and brake disks to a near contact position.

The proposed invention improves brake system efficiency by allowing increased running clearance between brake disks. Additionally, the invention minimizes the distance the piston has to travel, and the corresponding volume of oil required from brake valve, to engage the brake in power-down condition.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.
Fig. 1 is a cross-section view of a brake assembly with a brake retractor system according to an embodiment of the present invention.
Fig. 2 is a cross-section view of a brake assembly with a brake retractor system in an embodiment of the present invention engaging a pair of friction disks and moving axially to eliminate running clearance.
Fig. 3 is a cross-section view of a brake assembly with a brake retractor system in an embodiment of the present invention fully engaging a pair of friction disks and eliminating running clearance.
Fig. 4 is an expanded view of the brake retractor system according to an embodiment of the present invention.

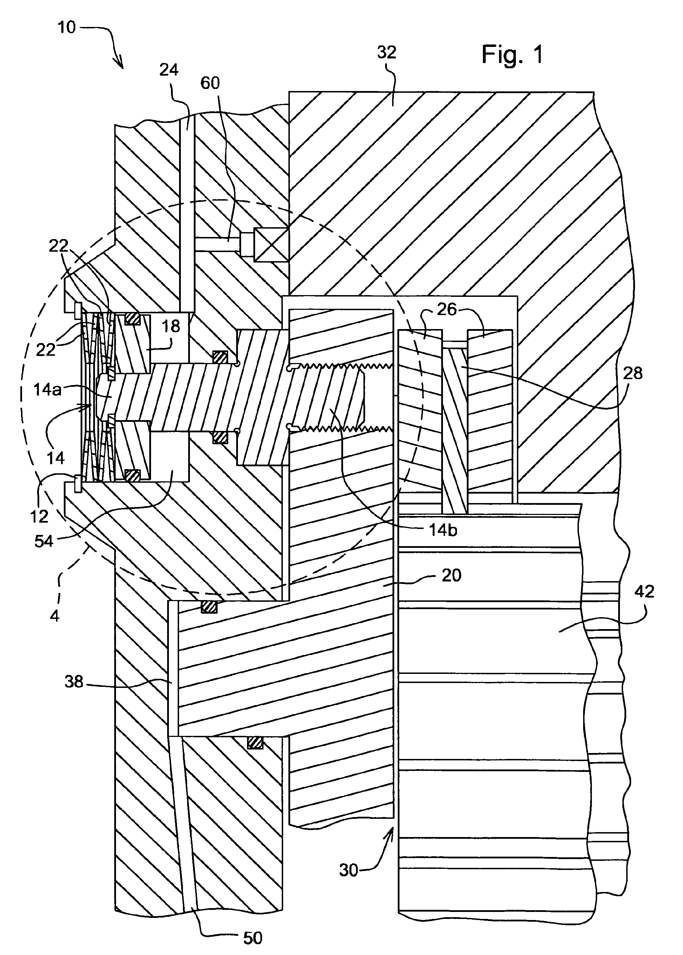

In general, the present invention is directed to a spring-loaded brake retractor system 36, Figs. 1-4, comprising a retractor shaft 14, brake spring 22 and retractor piston 18.

Reference is made to Fig. 1, which shows a brake assembly designated at 10, generally embodying the principles of the present invention. As its primary components, the brake assembly 10 includes a retractor shaft 14 mounted inside a brake housing cavity 32, having a first end 14a and a second end 14b; a retractor piston 18 attached to the first end of retractor shaft 14a; a brake piston 20 attached to the second end of the retractor shaft 14b that prevents the brake piston 20 from rotating, and to facilitate the axial movement of the brake piston 20 during the engaged or disengaged modes; a retractor piston 18 adjacently located next to a brake spring 22, which utilizes a source of hydraulic pressure or fluid flowing through a passage 24 to disengage the brake and retract the brake piston 20 in a second direction opposite the first; a brake spring 22 situated between a retaining device such as a snap ring 12 that enables a retractor piston 18 and retractor shaft 14 to move in a first direction to engage the brake piston 20. At least one separator plate 28 is fixedly splined onto a rotating hub 42. Also fixedly splined into a stationary brake housing cavity 32 is at least a first and second friction disk 26 for engaging separator disk 28 that is splined onto hub 42 that rotates within brake housing cavity 32. With at least a first and second friction disk 26 separator plate 28 fits in between the at least first and second friction disks 26 to hold them together.

As shown in Fig. 1, during normal tractor operation, brake valve (not shown) is deenergized, oil pressure in annular passage 38 is zero and hydraulic pressure is supplied to retractor piston cavity 54 through passage 24. This hydraulic pressure in cavity 54 acts to move retractor piston 18 against spring 22, the movement of the retractor piston 18 also moves the retractor shaft 14, and the brake piston 20 in the second direction within the brake housing cavity 32. Under this condition, the brake piston 20 is disengaged, and the running clearance 30 is created and or realized.

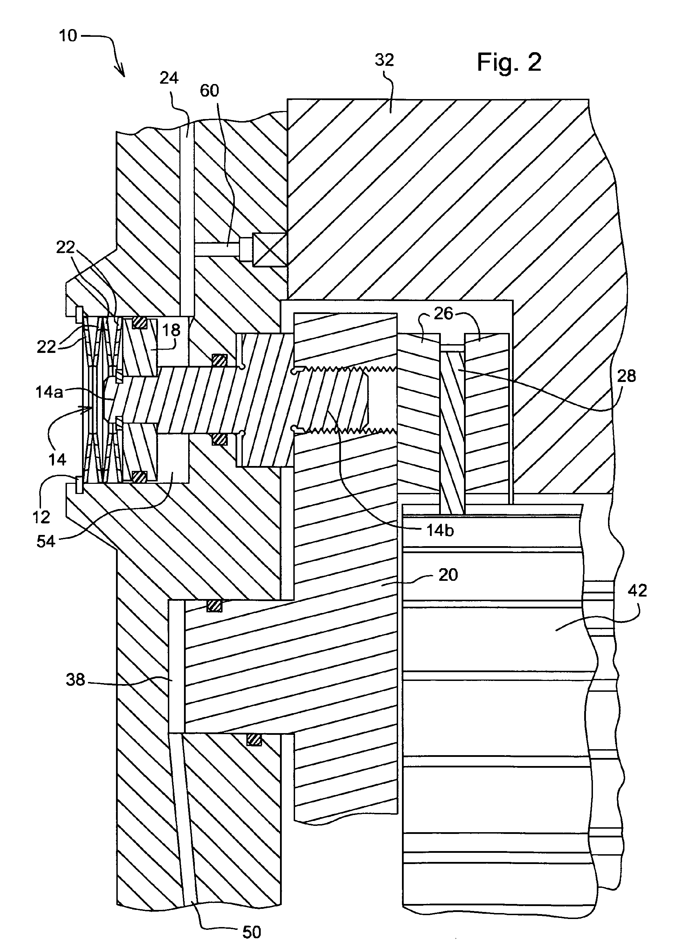

As shown in Fig. 2, during normal braking, brake valve (not shown) is energized, which sends pressured oil to brake piston annular passage 38 via passage 50, this pressurized oil moves the brake piston 20 within the brake housing cavity 32, closing the running clearances 30 on each side of the at least first and second friction disks 26 and resulting in frictional engagement of the at least first and second rotating friction disks 26 between brake piston 20 and brake housing cavity 32.

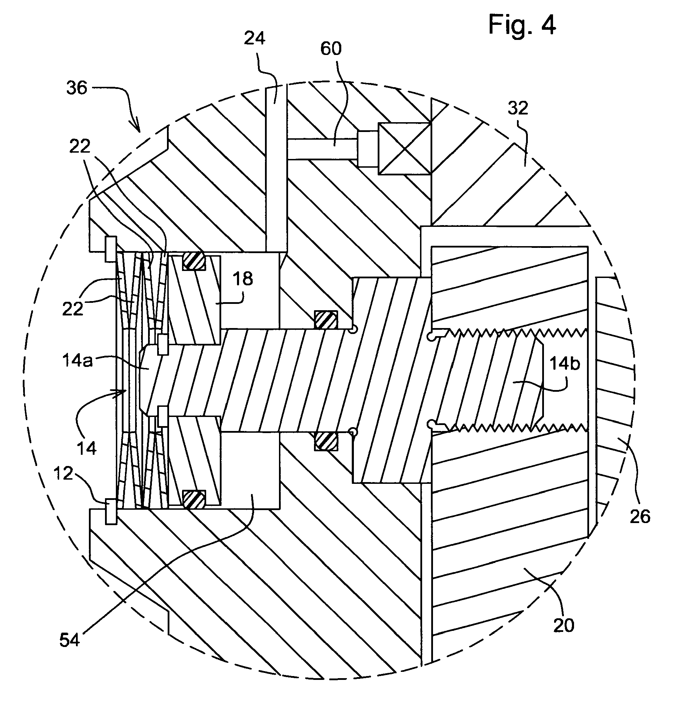

When brake is deenergized, as shown in Figs. 1 and 4, the source of hydraulic pressure or oil pressure in annular passage 38 is vented, and the retractor system 36 returns the brake piston 20 in a second direction opposite the first to its initial position, disengaging brake piston 20 from the at least first and second friction disks 26.

The actual running clearance of the brake assembly 10 equals the distance the brake piston 20 must travel in order to clamp the at least first and second friction disks 26 equal to the sum of the running clearances 30. The desired running clearance is based on various factors including at least a first and second friction disk 26, separator plates 28, the required response time of the brake assembly 10, the brake retractor system 36 and the cooling requirements for a particular application. In addition, windage effects may generate additional heat and prevent sufficient hydraulic pressure from flowing between the at least first and second friction disks 26. These factors may cause damage to brake assembly 10 having very small running clearance 30. Thus, running clearance 30 utilizing a brake retractor system 36 eliminates the risk of the damage, while still keeping the response time and pedal throw to a minimum.

The invention is carried out when the system 36 is in a power on condition, pressurized hydraulic pressure or fluid in a passage 24 to cavity 54 is used to retract the brake piston 20 in a second direction opposite the first, and apply a disengagement force against a brake spring 22. This retraction then provides a desired running clearance 30 between disks 26 and separator plate 28, Figs 1 and 4.

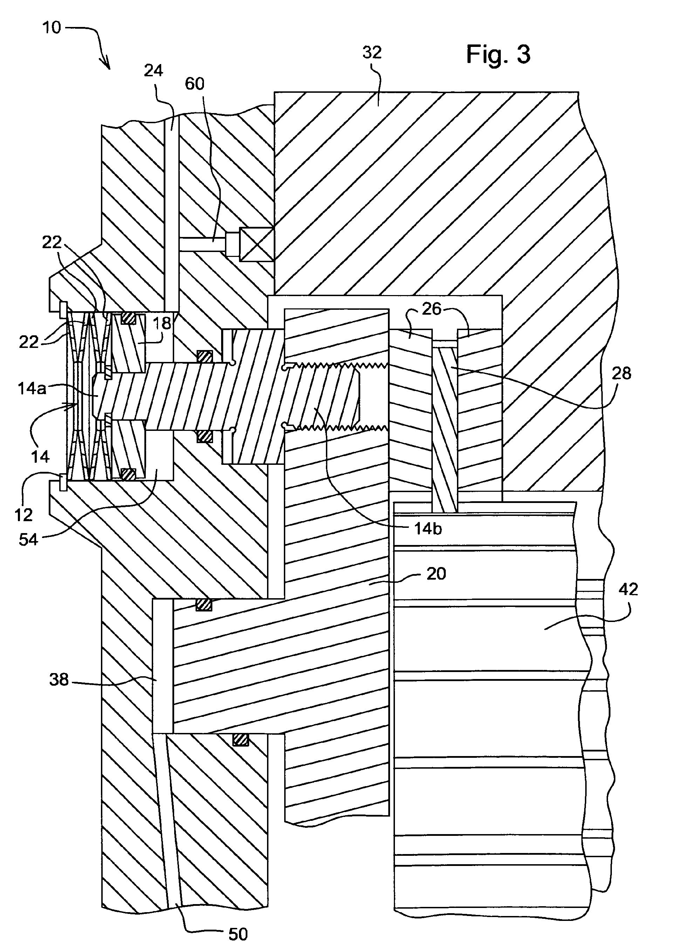

In the power down condition, as shown in Fig. 3, with system hydraulic pressure in passage 24, to cavity 54 being zero, the brake spring 22 will provide proper force in a first direction to position brake piston 20 against the at least first and second friction disks 26 to minimize the piston travel and bring brake piston 20 to a point called the kiss-up position. Due to the size of brake spring 22, brake spring 22 will only close the clearance gap 30 up to the kiss-up position. To reach full engagement, it is necessary for the operator to push the brake pedal to come to an immediate stop. The kiss-up position may also be referred to as a near contact position and essentially means there is not enough torque capacity in a power-down condition to completely engage the brake therefore less than full brake engagement occurs. Less that full engagement may also be considered as the point just prior to full engagement. Additionally, in the power down condition, the source of hydraulic pressure or fluid to the brake valve (not shown) is lost and limited flow volume from the brake valve exists therefore making it difficult to stop the vehicle. To accommodate this problem and reach full brake engagement, the brake pedal is pushed by operator to eliminate the remaining running clearance. If the running clearance 30 is eliminated, the flow volume of hydraulic pressure or fluid in passage 24 from the brake valve during an emergency stop will move the brake piston 20 to fully engage the at least first and second friction disks 26.

This invention is being shown and claimed with one brake retractor. However, a preferred alternative embodiment can be designed to accommodate three brake retractors. The three brake retractors are positioned on the outer edge of the brake piston. By locating the brake retractors on the outer edge of the brake piston, the entire system has a tendency to be more balanced than a system that positions its brake retractors near the center of axis of the brake piston. Passage 60 is used to supply oil pressure to all three brake retractors. Additionally, the further away each brake retractor is from the center of axis of the brake piston the more torque carrying capacity.

As the person skilled in the art will readily appreciate, the above description is meant as an illustration of implementation of the principles of this invention. This description is not intended to limit the scope or application of this invention in that the invention is susceptible to modification, variation and change, without departing from scope of this invention, as defined in the following claims.

## Claims

1. A hydraulic brake assembly (10) for a moving vehicle comprising:
at least one friction disk (26) splined into a brake housing cavity (32), the at least one friction disk (26) is engaged by a brake piston (20) and rotates within the brake housing cavity (32);
at least one separator plate (28) splined onto a rotating hub (42) within the brake housing cavity (32), the at least one separator plate (28) is engaged by the at least one friction disk (26);
a source of hydraulic fluid flowing within a narrow passage (24) in the brake housing cavity (32) for disengaging the brake (10) and retracting the brake piston (20);
a retractor shaft (14) mounted inside the brake housing cavity (32), having a first end (14a) and a second end (14b), a retractor piston (18) attached to the first end (14a) of the retractor shaft (14), the brake piston (20) attached to the second end (14b) of the retractor shaft (14), wherein the retractor piston (18) adjacently located next to a brake spring (22), the brake spring (22) situated between a retaining device (12) and the retractor piston (14) which engages the brake piston (20), **characterized in** further comprising
a brake piston annular passage 38 which can be hydraulically pressurized in order to move the brake piston (20) within the housing cavity (32) in a first direction;
a retractor piston cavity (54) which can be hydraulically pressurized in order to move the brake piston (20) within the housing cavity (32) in a second direction opposite to the first direction,
wherein in a power-on condition pressurizing the retractor piston cavity (54) a running clearance (30) between the brake piston (20) and the at least one friction disc (26) is created,
wherein the brake spring (22) is biased to urge the brake piston (20) to a near contact position for brake engagement, wherein in a power-down condition with hydraulic pressure in cavity (54) being zero the brake piston (20) is urged by the brake spring (22) to a near contact position in which the brake (10) is not fully engaged.

2. The hydraulic brake assembly (10) of claim 1 wherein the retractor shaft (14) facilitates an axial movement of the brake piston (20) during an engaged mode and a disengaged mode, wherein the retractor shaft (14) engages the brake piston (20) to cause axial movement.

3. The hydraulic brake assembly (10) of one of the foregoing claims further comprising a brake valve wherein the source of hydraulic fluid within a brake valve is zero during a power-down condition.

4. The hydraulic brake assembly (10) of one of the foregoing claims wherein the source of hydraulic fluid provides a force to the retractor piston (18) and retractor shaft (14) and wherein the retractor shaft (14) applies the force to the brake piston (20).

## Patentansprüche

1. Hydraulikbremseinheit (10) für ein fahrendes Fahrzeug, die Folgendes umfasst:
mindestens eine in einem Bremsgehäusehohlraum (32) keilverzahnte Friktionsscheibe (26), wobei ein Bremskolben (20) in die mindestens eine Friktionsscheibe (26) eingreift, die sich innerhalb des Bremsgehäusehohlraums (32) dreht;
mindestens eine an einer Drehnabe (42) innerhalb des Bremsgehäusehohlraums (32) keilverzahnte Separatorplatte (28), wobei die mindestens eine Friktionsscheibe (26) in die mindestens eine Separatorplatte (28) eingreift;
eine Hydraulikfluidquelle, wobei das Fluid innerhalb eines engen Durchgangs (24) im Bremsgehäusehohlraum (32) strömt, um die Bremse (10) freizugeben und den Bremskolben (20) einzuziehen;
eine im Innern des Bremsgehäusehohlraums (32) montierte Einzugswelle (14) mit einem ersten Ende (14a) und einem zweiten Ende (14b), wobei ein Einzugskolben (18) am ersten Ende (14a) der Einzugswelle (14) und der Bremskolben (20) am zweiten Ende (14b) der Einzugswelle (14) befestigt sind, wobei der Einzugskolben (18) direkt angrenzend an eine Bremsfeder (22) vorgesehen ist und sich die Bremsfeder (22) zwischen einer Rückhaltevorrichtung (12) und dem Einzugskolben (18) befindet, der in den Bremskolben (20) eingreift,
**dadurch gekennzeichnet, dass** sie weiterhin Folgendes umfasst:
einen ringförmigen Bremskolbendurchgang (38), der hydraulisch druckbeaufschlagt werden kann, um den Bremskolben (20) innerhalb des Gehäusehohlraums (32) in einer ersten Richtung zu bewegen;
einen Einzugskolbenhohlraum (54), der hydraulisch druckbeaufschlagt werden kann, um den Bremskolben (20) innerhalb des Gehäusehohlraums (32) in einer zweiten Richtung entgegen der ersten Richtung zu bewegen,
wobei in einem eingeschalteten Zustand, in dem der Einzugskolbenhohlraum (54) druckbeaufschlagt wird, ein Luftspiel (30) zwischen dem Bremskolben (20) und der mindestens einen Friktionsscheibe (26) geschaffen wird,
wobei die Bremsfeder (22) vorgespannt wird, um den Bremskolben (20) für einen Bremseneingriff in eine Beinahe-Kontakt-Position gedrängt wird, wobei in einem ausgeschalteten Zustand, in dem der Hydraulikdruck im Hohlraum (54) null beträgt, der Bremskolben (20) durch die Bremsfeder (22) in eine Beinahe-Kontakt-Position gedrängt wird, in der die Bremse (10) nicht in vollem Eingriff steht.

2. Hydraulikbremseinheit (10) nach Anspruch 1, bei der die Einzugswelle (14) eine axiale Bewegung des Bremskolbens (20) während eines Eingriffsmodus und eines Freigabemodus ermöglicht, wobei die Einzugswelle (14) in den Bremskolben (20) eingreift, um eine axiale Bewegung zu bewirken.

3. Hydraulikbremseinheit (10) nach einem der vorstehend aufgeführten Ansprüche, die weiterhin ein Bremsventil umfasst, wobei die Hydraulikfluidquelle innerhalb eines Bremsventils während eines ausgeschalteten Zustands null beträgt.

4. Hydraulikbremseinheit (10) nach einem der vorstehend aufgeführten Ansprüche, bei der die Hydraulikfluidquelle eine Kraft für den Einzugskolben (18) und die Einzugswelle (14) bereitstellt, und wobei die Einzugswelle (14) die Kraft auf den Bremskolben (20) überträgt.

## Revendications

1. Ensemble frein hydraulique (10) pour un véhicule en mouvement comprenant :
au moins un disque de friction (26) monté par cannelures dans une cavité de logement de frein (32), l'au moins un disque de friction (26) étant engagé par un piston de frein (20) et tournant à l'intérieur de la cavité de logement du frein (32) ;
au moins une plaque séparatrice (28) montée par cannelures sur un moyeu rotatif (42) à l'intérieur de la cavité de logement du frein (32), l'au moins une plaque séparatrice (28) étant engagée par l'au moins un disque de friction (26) ;
une source de fluide hydraulique s'écoulant à l'intérieur d'un passage étroit (24) dans la cavité de logement du frein (32) pour dégager le frein (10) et rétracter le piston du frein (20) ;
un arbre de retrait (14) monté à l'intérieur de la cavité de logement du frein (32), ayant une première extrémité (14a) et une deuxième extrémité (14b), un piston de retrait (18) attaché à la première extrémité (14a) de l'arbre de retrait (14), le piston du frein (20) étant attaché à la deuxième extrémité (14b) de l'arbre de retrait (14), dans lequel le piston de retrait (18) est situé de manière adjacente à côté d'un ressort de frein (22), ce ressort de frein (22) étant situé entre un dispositif de retenue (12) et le piston de retrait (18) qui s'engage avec le piston du frein (20), **caractérisé en ce qu'**il comprend en outre
un passage annulaire de piston de frein (38) qui peut être pressurisé hydrauliquement afin de déplacer le piston du frein (20) à l'intérieur de la cavité du logement (32) dans une première direction ;
une cavité de piston de retrait (54) qui peut être pressurisée hydrauliquement afin de déplacer le piston du frein (20) à l'intérieur de la cavité du logement (32) dans une deuxième direction opposée à la première direction ;
dans lequel, dans une condition de puissance appliquée pressurisant la cavité du piston de retrait (54), un jeu fonctionnel (30) entre le piston du frein (20) et l'au moins un disque de friction (26) est créé,
dans lequel le ressort du frein (22) ayant pour effet de pousser le piston du frein (20) dans une position proche du contact pour l'engagement du frein, dans lequel, dans une condition de puissance non appliquée avec la pression hydraulique dans la cavité (54) étant nulle, le piston du frein (20) est poussé par le ressort du frein (22) dans une position proche du contact dans laquelle le frein (10) n'est pas complètement engagé.

2. Ensemble frein hydraulique (10) selon la revendication 1, dans lequel l'arbre de retrait (14) facilite un mouvement axial du piston du frein (20) pendant un mode engagé et un mode dégagé, l'arbre de retrait (14) s'engage avec le piston du frein (20) pour causer un mouvement axial.

3. Ensemble frein hydraulique (10) selon l'une quelconque des revendications précédentes, comprenant en outre une valve de commande de frein, dans lequel la source de fluide hydraulique à l'intérieur d'une valve de commande de frein est nulle pendant une condition de puissance non appliquée.

4. Ensemble frein hydraulique (10) selon l'une quelconque des revendications précédentes, dans lequel la source de fluide hydraulique fournit une force au piston de retrait (18) et à l'arbre de retrait (14) et dans lequel l'arbre de retrait (14) applique cette force sur le piston du frein (20).
